# EUROPÄISCHE PATENTANMELDUNG

(11) **EP 0 982 157 A2**
(43) Veröffentlichungstag der Anmeldung: **01.03.2000**
(21) Anmeldenummer: 99113184.8
(22) Anmeldetag: 08.07.1999
(51) Int. Cl.: B60B 37/10, B60B 9/00

(54) **Kinderwagenlaufrad**

(30) Priorität: 21.08.1998 DE 29814971 U; 17.09.1998 DE 29816644 U
(71) Anmelder: BRITAX-TEUTONIA KINDERWAGENFABRIK GmbH, D-32120 Hiddenhausen (DE)
(72) Erfinder: Weigel, Klaus, 32130 Enger (DE)
(74) Vertreter: Stracke, Alexander, Dipl.-Ing.

(57) **Zusammenfassung**

Ein Kinderwagenlaufrad mit einem auf eine Felge aufgezogenen Reifen und mit wenigstens einem in eine Bohrung der Felgennabe eingesetzten Lagerelement und welches frei drehbar auf einem Bolzen gelagert und mittels einer Klemmfeder gegen axiale Verschiebung gesichert ist, soll so gestaltet werden, daß die Lagerung auf einer Achse oder auf einem Bolzen verbessert wird.

Erfindungsgemäß kann nach einem ersten Lösungsvorschlag die Aufnahme (14) für die Klemmfeder und die Felge (11) ein einstückiges Formteil sein. Gemäß einem zweiten Lösungsvorschlag können Innenringe vom Wälzlager (13) auf Lagerbuchsen (20) unverdrehbar gelagert sein, wobei die Lagerbuchsen (20) drehfest auf der Radachse gelagert sind und aus einem korrosionsbeständigem Material hergestellt sind. Gemäß einer weiteren Möglichkeit ist vorgesehen, daß die Aufnahme (14) für die Klemmfeder und die Buchsen (20) ein einstückiges Formteil bildet.
Das erfindungsgemäße Kinderwagenlaufrad ist für alle Kinderwagenbauarten geeignet .

## Beschreibung

Die Erfindung betrifft ein Kinderwagenlaufrad mit einem auf eine Felge aufgezogenen Reifen und mit wenigstens einem in eine Bohrung der Felgennabe eingesetzten Lagerelement, daß das Kinderwagenlaufrad frei drehbar auf einen Bolzen gelagert ist und mittels einer Klemmfeder gegen axiale Verschiebung gesichert ist, die in eine Aufnahme eingreift.

Bei den bisher bekannten Kinderwagenlaufrädern sind die Lagerelemente üblicherweise Lagerbuchsen, die auch die Aufnahmen für die Klemmfedern aufweisen. Die Klemmfedern liegen bei aufgestecktem Kinderwagenlaufrädern außen. Nach Betätigen der Klemmfedern läßt sich jedes Kinderwagenlaufrad von der Achse bzw. dem Bolzen abziehen. Da es sich um eine Gleitlagerung handelt, ist die Reibung verhältnismäßig hoch, so daß ein entsprechender Kraftaufwand zum Schieben eines Kinderwagens notwendig ist. Der Erfindung liegt die Aufgabe zugrunde, ein Kinderwagenlaufrad mit einer verbesserten Möglichkeit des Lagerns auf einer Achse oder einem Bolzen zu schaffen. Die gestellte Aufgabe wird (nach einem ersten Lösungsvorschlag) gelöst, indem die Aufnahme für die Klemmfeder und die Felge ein einstückiges Formteil sind.

Die Aufnahme für die Klemmfeder ist der Felgennabe zugeordnet. Nunmehr kann die Lagerbuchse entfallen, so daß größere Einbauräume zur Verfügung stehen. Es ist deshalb in weiterer Ausgestaltung vorgesehen, daß in die Bohrung der Felgennabe zwei Wälzlager eingesetzt sind. Die Reibung von Wälzlagern ist deutlich geringer als eines Gleitlagers, so daß der Kinderwagen leichter geschoben werden kann. Die Aufnahme für die Klemmfeder bildet gleichzeitig eine seitliche Begrenzung für eines der Wälzlager. Der Abstand zwischen den beiden Wälzlagern wird durch eine Distanzhülse fixiert. Damit das der Aufnahme für die Klemmfeder gegenüberliegende Wälzlager sich nicht zum äußeren Ende der Felgennabe verschieben kann, ist vorgesehen, daß das der Aufnahme für die Klemmfeder gegenüberliegende Ende der Felgennabe krallenförmig ausgebildet ist, so daß die Hinterschneidungen den Außenring des Wälzlagers hintergreifen. Damit jedoch eine einfache Montage dieses Wälzlagers möglich ist, ist vorgesehen, daß der der Aufnahme für die Klemmfeder gegenüberliegende Bereich der Felgennabe als Federzungen ausgebildet ist, die an ihren äußeren Enden die krallenartigen Hinterschneidungen aufweisen.

Es ist unvermeidbar, daß Feuchtigkeit in den Sitz für die Innenringe der Wälzlager auf den Achsen eindringt. Dieser Sitz ist üblicherweise ein Preßsitz, der nicht zum Abnehmen des Wälzlagers gedacht ist. Da die Achse und der Innenring des Wälzlagers aus rostendem Stahl bestehen, wird durch die Rostbildung das Abnehmen im Zuge einer Demontage unmöglich, zumindest jedoch erschwert. Um diesen Nachteil zu vermeiden, ist nach einem weiteren Vorschlag vorgesehen, daß die Innenringe der Wälzlager auf drehfest auf die Radachse aufgesetzten Lagerbuchsen aus einem korrosionsbeständigen oder nicht rostenden Material, vorzugsweise aus einem Kunststoff unverdrehbar gelagert sind. Dadurch wird eine sinngemäße Lagerung der Lagerbuchse auf der Achse erreicht, selbst dann noch, wenn die Qualität der Oberflächengüte der Achse im Laufe der Zeit vermindert wird oder wenn es zu einer Beschädigung kommt. Bei einer solchen Ausführung ist es dann besonders konstruktiv einfach, wenn zwischen den Wälzlagern ein deren axiale Verschiebung nach innen sichernder Distanzring vorgesehen ist, und wenn die Lagerbuchsen und der Distanzring als ein einstückiges Formteil ausgebildet sind. Dadurch wird die Montage vereinfacht und die Anzahl der Bauteile auf einem geringstmöglichen Maß gehalten. Damit jedoch nach dem Einsetzen des Wälzlagers ein Federn der Zungen verhindert wird, ist vorgesehen, daß auf das der Aufnahme gegenüberliegende Ende der Felgennabe ein Sicherungsring fest, vorzugsweise mit einem Preßsitz aufgesetzt ist. Dieser Sicherungsring kann sich nicht verdrehen, da vorgesehen ist, daß er form- und/oder kraftschlüssig auf das der Aufnahme gegenüberliegende Ende der Felgennabe aufgesetzt ist. Dieser Sicherungsring hat nicht nur eine Sicherungsfunktion, sondern kann gleichzeitig eine Komponente der Feststellvorrichtung für den Kinderwagen sein. Dazu ist er dann mit einer Vielzahl von Ausnehmungen versehen, in die beispielsweise ein Sperrglied eingreift. Da der Schiebekomfort durch die Wälzlager erhöht ist, ist auch noch vorgesehen, daß der auf die Felge aufgezogene Reifen ein Luftreifen ist, da dieser eine optimale Dämpfung ergibt.

Schließlich kann die gestellte Aufgabe auch noch durch einen weiteren Vorschlag gelöst werden, indem die Aufnahme für die Klemmfeder und die Buchsen ein einstückiges Formteil bilden.

Anhand der beiliegenden Zeichnungen ist die Erfindung noch näher erläutert. Es zeigen:
- Figur 1: ein Kinderwagenlaufrad mit einem aufgezogenen Luftreifen in Schnittdarstellung,
- Figur 2: die Felge des in der Figur 1 dargestellten Kinderwagenlaufrades in einer Seitenansicht, mit Blick auf den Sicherungsring,
- Figur 3: die Nabe des Kinderwagenlaufrades nach der Figur 1 in einer Seitenansicht, jedoch als Hälfte, mit Blick von der Aufnahme für die Klemmfeder gesehen und
- Figur 4: die Lagerung des Kinderwagenlaufrades nach der Figur 1 als Einzelheit in vergrößerter Darstellung.
- Figur 5: die Lagerung des Kinderwagenlaufrades nach der Figur 1 als Einzelheit in einer vergrößerten Darstellung in einer gegenüber der Figur 4 geänderten Ausführung.

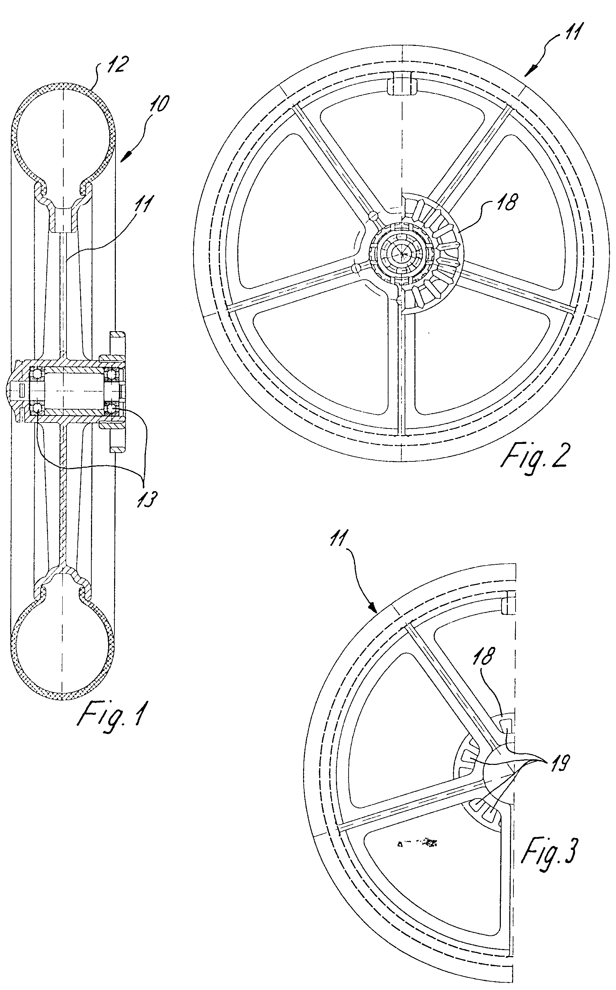

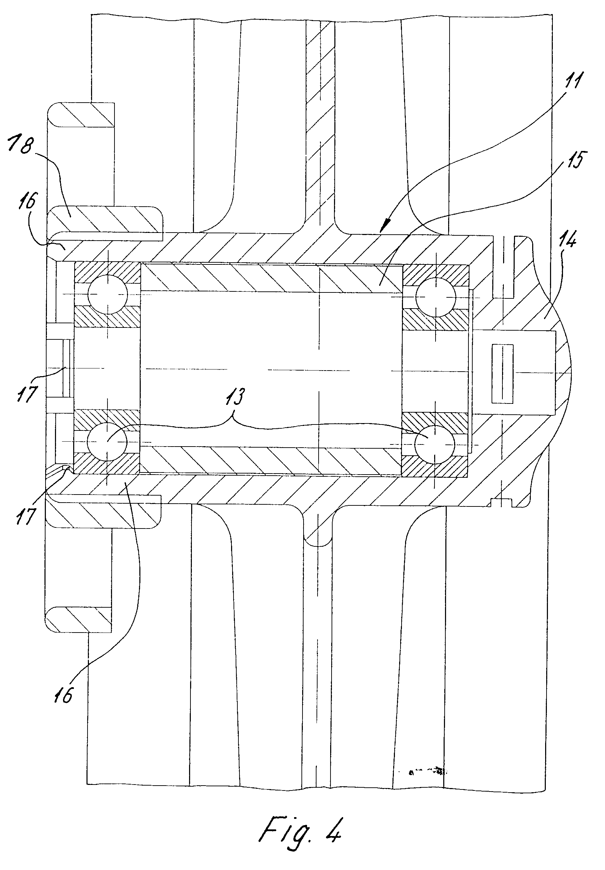

Das in der Figur 1 dargestellte Kinderwagenlaufrad 10 ist als Speichenrad ausgebildet. Auf den äußeren Kranz der Felge 11 ist ein Luftreifen 12 aufgezogen. In die Bohrung der Felgennabe sind in den Endbereichen Wälzlager 13 in Form von Rillenkugellagern eingesetzt. Wie insbesondere die Figur 1 in Verbindung mit der Figur 4 zeigt, ist an die Felge bzw. an die Felgennabe eine Aufnahme 14 für eine nicht dargestellte Klemmfeder angesetzt, so daß die Felge 11 mit der Aufnahme 14 ein einstückiges Formteil aus Kunststoff bilden. Die Aufnahme 14 bildet gleichzeitig die axiale Sicherung bzw. Begrenzung für das zugeordnete Wälzlager 13. Mittels einer Distanzhülse 15 wird der Abstand der beiden Wälzlager 13 fixiert. Damit das der Aufnahme 14 gegenüberliegende Wälzlager 13 sich nicht nach außen verschiebt, ist der der Aufnahme 14 gegenüberliegende Bereich der Felgennabe geschlitzt, so daß Federzungen 16 entstehen. Diese haben an den äußeren freien Enden krallenartig ausgebildete Hinterschneidungen 17, die den Außenring des zugehörigen Wälzlagers 13 hintergreifen. Damit die Federzungen nach dem Einsetzen der Wälzlager 13 in die Bohrung der Radnabe nicht mehr federn können, ist vorgesehen, daß auf das der Aufnahme 14 gegenüberliegende Ende der Radnabe ein Sicherungsring 18 mit einem Preßsitz aufgesetzt ist. Dieser Sicherungsring 18 ist mit Öffnungen 19 versehen, da er eine Komponente der Feststellvorrichtung ist. In die Öffnungen 19 kann ein Sperrglied eingreifen. Außerdem ist der Sicherungsring 18 formschlüssig auf das zugehörige Ende der Felgennabe aufgesetzt. Dazu sind entweder in der Bohrung des Sicherungsringes 18 Nuten und Stege vorgesehen, die in entsprechende Nuten und Stege der Radfelge eingreifen.

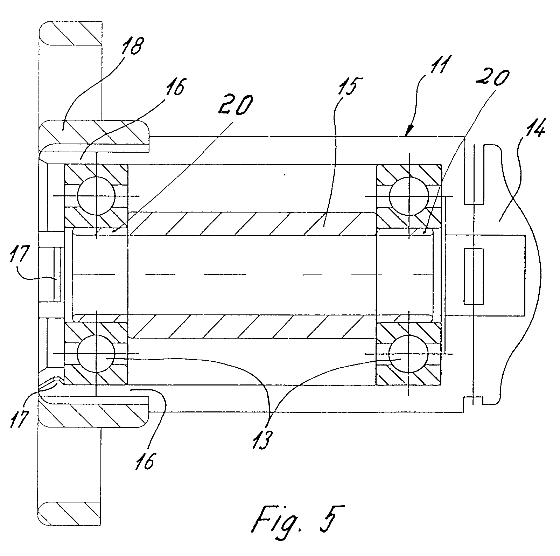

Bei der Ausführung nach der Figur 5 sind die Wälzlager 13 auf Lagerbuchsen 20 drehfest aufgesetzt, die aus einem korrosionsbeständigen oder nicht rostenden Material bestehen. Vorzugsweise sind diese Lagerbuchsen 18 aus einem Kunststoff gefertigt. Sie werden drehfest auf eine nicht dargestellte Radachse aufgesetzt. Auch die Innenringe der Wälzlager 13 sind unverdrehbar auf den Lagerbuchsen 20 gelagert. Im dargestellten Ausführungsbeispiel stimmt der Innendurchmesser des Distanzringes 15 mit dem Außendurchmesser der Radachse 20 überein, so daß die Distanzbuchse 15 mit den Lagerbuchsen 20 ein einstückiges Formteil bilden. Die Lagerbuchsen 20 gewährleisten, daß die Wälzlager 13 zwar nicht im Schiebesitz gelagert sind, daß sie jedoch auch nach längerer Zeit problemlos von der Radachse 20 bzw. von den Lagerbuchsen 20 abgezogen werden können, da keine Rostbildung zwischen der Radachse und den Innenringen der Wälzlager 13 erfolgen kann. Selbst wenn die Oberflächenqualität der Rad achse sich im Laufe der Zeit verschlechtert, ist das problemlose Abziehen der Wälzlager gewährleistet.

In nicht dargestellter Weise kann auch die Aufnahme 14 für die Klemmfelder und die Buchsen 20 ein einstückiges Formteil bilden.

Die Erfindung ist nicht auf die dargestellte Ausführung beschränkt. Wesentlich ist die Einstückigkeit der Aufnahme 14 mit der Felge 11 und die Lagerung des Kinderwagenlaufrades 10 mittels der beiden Wälzlager 13.

## Patentansprüche

1. Kinderwagenlaufrad mit einem auf eine Felge aufgezogenen Reifen und mit wenigstens einem in eine Bohrung der Felge eingesetzten Lagerelement, wobei das Kinderwagenlaufrad frei drehbar auf einem Bolzen lagerbar ist und mittels einer in eine Aufnahme eingreifenden Klemmfeder gegen eine axiale Verschiebung gesichert ist, **dadurch gekennzeichnet**, daß die Aufnahme (14) für die Klemmfeder und die Felge (11) ein einstückiges Formteil bilden.

2. Kinderwagenlaufrad nach Anspruch 1, **dadurch gekennzeichnet**, daß in die Bohrung der Felge (11) zwei im Abstand zueinander stehende Wälzlager (13) eingesetzt sind.

3. Kinderwagenlaufrad nach Anspruch 1 und 2, **dadurch gekennzeichnet**, daß der der Aufnahme (14) für die Klemmfeder gegenüberliegende Bereich der Felge krallenartige Hinterschneidungen (17) aufweist, die den Außenring des zugehörigen Wälzlagers (13) hintergreifen.

4. Kinderwagenlaufrad nach Anspruch 3, **dadurch gekennzeichnet**, daß der der Aufnahme (14) gegenüberliegende Bereich der Felge (11) zur Bildung von federnden Zungen geschlitzt ist.

5. Kinderwagenlaufrad mit einem auf eine Felge aufgezogenen Reifen und mit wenigstens einem in eine Bohrung der Felge eingesetzten Lagerelement, wobei das Kinderwagenlaufrad frei drehbar auf einem Bolzen lagerbar ist und mittels einer in eine Aufnahme eingreifenden Klemmfeder gegen eine axiale Verschiebung gesichert ist, **dadurch gekennzeichnet**, daß die Innenringe der Wälzlager (13) auf drehfest auf die Radachse aufgesetzten Lagerbuchsen (20) aus einem korrosionsbeständigen oder nicht rostenden Material, vorzugsweise aus einem Kunststoff, unverdrehbar gelagert sind.

6. Kinderwagenlaufrad nach Anspruch 5, **dadurch gekennzeichnet**, daß zwischen den Wälzlagern (13) ein deren axiale Verschiebung nach innen sichernder Distanzring (15) vorgesehen ist, und daß die Lagerbuchsen (20) und der Distanzring (15) als ein einstückiges Formteil ausgebildet sind.

7. Kinderwagenlaufrad nach einem oder mehreren der vorhergehenden Ansprüche 1 bis 6, **dadurch gekennzeichnet**, daß auf den der Aufnahme (14) für die Klemmfeder gegenüberliegenden Endbereich der Felge ein Sicherungsring (18) fest aufgesetzt ist.

8. Kinderwagenlaufrad nach Anspruch 7, **dadurch gekennzeichnet**, daß der Sicherungsring (18) kraft- und/oder formschlüssig auf das der Aufnahme (14) für die Klemmfeder gegenüberliegende Ende der Nabe aufgesetzt ist.

9. Kinderwagenlaufrad nach einem oder mehreren der vorhergehenden Ansprüche 1 bis 8, **dadurch gekennzeichnet**, daß der Sicherungsring (18) eine Komponente einer Feststellvorrichtung bildet.

10. Kinderwagenlaufrad nach einem oder mehreren Ansprüche 1 bis 9, **dadurch gekennzeichnet**, daß der Reifen des Kinderwagenlaufrades (10) ein Luftreifen (12) ist.

11. Kinderwagenlaufrad mit einem auf eine Felge aufgezogenen Reifen und mit wenigstens einem in eine Bohrung der Felge eingesetzten Lagerelement, wobei das Kinderwagenlaufrad frei drehbar auf einem Bolzen lagerbar ist und mittels einer in eine Aufnahme eingreifenden Klemmfeder gegen eine axiale Verschiebung gesichert ist, **dadurch gekennzeichnet**, daß die Aufnahme (14) für die Klemmfeder und die Buchsen (20) ein einstückiges Formteil bilden.
